# EUROPÄISCHE PATENTANMELDUNG

(11) **EP 3 075 501 A1**
(43) Veröffentlichungstag der Anmeldung: **05.10.2016**
(21) Anmeldenummer: 15161551.5
(22) Anmeldetag: 28.03.2015
(51) Int. Cl.: B27B 5/34

(54) **Kappsäge für eine Schneidemaschine**

(71) Anmelder: D. Swarovski KG, 6112 Wattens (AT)
(72) Erfinder: Schweigl, Johannes, 6414 Mieming (AT); Schwabegger, Hubert, 6073 Sistrans (AT); Karger, Joachim, 6134 Vomp (AT); Lindenthaler, Gerhard, 6408 Pettnau (AT); Mimm, Andreas, 6020 Innsbruck (AT); Schiffmann, Peter, 6133 Weerberg (AT)
(74) Vertreter: Fabry, Bernd

(57) **Zusammenfassung**

Die Erfindung betrifft eine Kappsäge für eine Schneidmaschine, mit einer Drehachse (2) und aufweisend eine kreisförmige erste Sägezahnscheibe (4) und einen die erste Sägezahnscheibe (4) aufnehmenden ersten Träger (3), wobei die erste Sägezahnscheibe (4) über ihren Umfang und/oder an ihren Planflächen eine Mehrzahl von Sägezähnen (5) aufweist, und wobei der erste Träger (3) entlang der Drehachse (2) symmetrisch ausgebildet ist, und wobei der erste Träger (3) an einer ersten Trägerfläche (7) einen Haltedorn (9) zur Aufnahme der Kappsäge (1) in einem Maschinenfutter der Schneidmaschine aufweist, und wobei die erste Sägezahnscheibe (4) an einer zweiten Trägerfläche (8) des ersten Trägers (3) positioniert ist, welche von der ersten Trägerfläche (7) abgewandt ausgebildet ist, und wobei die Kappsäge (1) eine zweite Sägezahnscheibe (11) aufweist, welche parallel zur ersten Sägezahnscheibe (4) angeordnet ist.

## Beschreibung

### GEBIET DER ERFINDUNG

Die Erfindung betrifft eine Kappsäge für eine Schneidmaschine nach dem Oberbegriff des Patentanspruchs 1.

### STAND DER TECHNIK

Kappsägen für Schneidmaschinen sind bekannt. Im Allgemeinen umfasst die Kappsäge einen Träger, welcher ein Sägeblatt bzw. eine Sägezahnscheibe unbewegbar aufnimmt. Der Träger ist mit der Schneidmaschine drehfest verbunden und eine rotierende Welle der Schneidmaschine treibt die Kappsäge an, wobei diese dann rotierend ein Werkstück zerspanen oder kappen kann.

Ein wesentlicher Unterscheid zwischen einer Kappsäge und einer Kreissäge ist eine Bearbeitungs- bzw. Arbeitsrichtung der Sägen bzgl. eines Rohlings bzw. Werkstücks. Weist bspw. der Rohling bzw. das Werkstück eine Längsachse auf, deren Richtung der Arbeitsrichtung der Kreissäge entspricht, ist die Arbeitsrichtung der Kappsäge quer zu dieser.

Aus der Offenlegungsschrift DE 32 18 562 A1 geht bspw. eine Kreissäge für eine Schneidmaschine hervor. Das Sägeblatt weist einen schleifkornbesetzten Flächeabschnitt auf zur Verzögerung einer Abstumpfung des Sägeblattes.

Aus der Gebrauchsmusterschrift DE 20 2004 009 761 U1 geht eine Kappsäge mit einem Träger und einem Sägeblatt hervor, wobei der Träger und das Sägeblatt zur Herstellung einer drehfesten Verbindung miteinander verklebt und verschweißt sind.

Allerdings sind zur Herstellung von Werkstücken, wie bspw. Würfel oder Prismen aus einem Rohling bei Einsatz der bekannten Kappsägen mehrere Arbeitsschritte notwendig. Dadurch ist die Herstellung der Würfel oder Prismen zeitaufwendig und kostenintensiv.

Aufgabe der vorliegenden Erfindung ist es eine Kappsäge für eine Schneidmaschine bereitzustellen, welche Arbeitsschritte zur Herstellung von Werkstücken reduziert.

### BESCHREIBUNG DER ERFINDUNG

Die Aufgabe wird erfindungsgemäß durch eine Kappsäge für eine Schneidmaschine mit den Merkmalen das Patentanspruchs 1 gelöst. Vorteilhafte Ausgestaltungen mit zweckmäßigen und nicht-trivialen Weiterbildungen der Erfindung sind in den jeweiligen Unteransprüchen angegeben.

Die erfindungsgemäße Kappsäge für eine Schneidmaschine, mit einer Drehachse, weist eine kreisförmige erste Sägezahnscheibe und einen die erste Sägezahnscheibe aufnehmenden ersten Träger auf. Die erste Sägezahnscheibe besitzt eine Mehrzahl von Sägezähnen, welche über ihrem Umfang und/oder an ihren Planflächen angeordnet sind. Der erste Träger ist bezüglich der Drehachse achsen- und rotationssymmetrisch ausgebildet. Zur Aufnahme der Kappsäge in einem Maschinenfutter der Schneidmaschine weist der erste Träger an einer ersten Trägerfläche einen Haltedorn auf. Die erste Sägezahnscheibe ist an einer zweiten Trägerfläche des ersten Trägers positioniert, welche von der ersten Trägerfläche abgewandt ausgebildet ist. Die Kappsäge weist eine zweite Sägezahnscheibe auf, welche parallel zur ersten Sägezahnscheibe angeordnet ist.

Üblicherweise besitzen Kappsägen eine einzige Sägezahnscheibe. Der wesentliche Vorteil ist, dass aufgrund der mehrfachen Anzahl Sägezahnscheiben, welche parallel zueinander angeordnet sind, die Anzahl der Verfahrensschritte zur Herstellung von Werkstücken wie bspw. Prismen oder Würfel reduziert wird.

In einer Ausgestaltung ist die erste Sägezahnscheibe mit der zweiten Sägezahnscheibe drehfest verbunden. Der Vorteil ist, dass aufgrund der drehfesten Verbindung gesichert ist, dass eine Drehzahl der ersten Sägezahnscheibe einer Drehzahl der zweiten Sägezahnscheibe entspricht. Somit kann ein einfacher Antrieb und demzufolge ein einfaches Werkzeug realisiert werden.

In einer weiteren Ausgestaltung der Erfindung ist ein zweiter Träger ausgebildet, welcher die zweite Sägezahnscheibe aufnehmend ausgestaltet ist. Der Vorteil ist, dass die zweite Sägezahnscheibe unabhängig vom ersten Träger ausgebildet werden kann. Somit kann bspw. durch einen Austausch des zweiten Trägers auf einfache Weise eine Änderung eines axialen Abstandes zwischen den beiden Sägezahnscheiben herbeigeführt werden. Dies ist nicht möglich, wenn beide Sägezahnscheiben am ersten Träger befestigt sind.

Bevorzugt ist ein äußerer erster Scheibendurchmesser der ersten Sägezahnscheibe kleiner ausgebildet als ein äußerer zweiter Scheibendurchmesser der zweiten Sägezahnscheibe, so dass die erste Sägezahnscheibe in einem sägezahnfreien Bereich der zweiten Sägezahnscheibe positioniert werden kann. Dies führt zu einer kompakten Bauweise der Kappsäge.

Bei der Bestimmung der Scheibendurchmesser ist insbesondere darauf zu achten, dass der erste Scheibendurchmesser relativ zum zweiten Scheibendurchmesser nicht zu klein ausgebildet wird, damit ein Unterschied zwischen Schnittgeschwindigkeiten der beiden Sägezahnscheiben nicht zu groß wird.

Ein weiterer Vorteil ist, dass das Abführen der Werkstücke in Form von Quader, Würfel oder Prismen mit einem während des Kappvorganges eingesetzten Kühlschmiermittel erleichtert und ein Verklemmen der Werkstücke zwischen den Sägeblättern vermieden werden kann.

Insbesondere ist die erste Sägezahnscheibe, welche den ersten Scheibendurchmesser aufweist, der kleiner ist als der zweite Scheibendurchmesser, das Bauteil der Kappsäge, welches eine unterste Fläche der Kappsäge bereitstellt. Die unterste Fläche ist als die vom Haltedorn abgewandt ausgebildet Fläche der Kappsäge anzusehen. Im Betrieb ist die unterste Fläche die dem Rohling am nächsten gegenüberliegende Fläche der Kappsäge. Die zweite Sägezahnscheibe ist um einen bestimmten Abstand in Richtung des Haltedorns axial zur ersten Sägezahnscheibe versetzt. Im Betrieb kappt aufgrund des größeren zweiten Scheibendurchmessers die zweite Sägezahnscheibe demzufolge den Rohling in einer ersten Ebene und die erste Sägezahnscheibe kappt den Rohling in einer zweiten Ebene, wobei die erste Ebene der Kappsäge näher liegt als die zweite Ebene. Die durch die zweite Sägezahnscheibe freigesetzten Werkstücke verlassen aufgrund auftretender Fliehkräfte die Kappsäge in einem äußeren Bereich der Kappsäge bzw. werden von der Kappsäge weggeschleudert. Die durch die erste Sägezahnscheibe freigesetzten Werkstücke verlassen ebenfalls aufgrund auftretender Fliehkräfte die Kappsäge, allerdings ab einem gegenüber dem äußeren Bereich radial nach Innen versetzten Bereich der Kappsäge. Sofern nun die Differenz zwischen dem ersten Scheibendurchmesser und dem zweiten Scheibendurchmesser zu groß ist, könnten möglicherweise die Werkstücke zwischen die erste Sägezahnscheibe und die zweite Sägezahnscheibe gelangen und hier verklemmen. Die Scheibendurchmesser sind abhängig von der Werkstückgröße zu ermitteln.

In einer weiteren Ausgestaltung sind der zweite Träger und der erste Träger koaxial ausgebildet und der zweite Träger ist den ersten Träger in Richtung der Drehachse überwiegend umfassend ausgestaltet. Vorteilhafterweise ist damit ein einfacher Zusammenbau realisiert unter Vermeidung eines falschen Zusammenbaus. Des Weiteren kann durch die koaxiale Ausbildung die Wuchtgüte gesteigert werden.

Zur Weiterführung der kompakten Bauweise des Werkzeugs weist eine zweite Trägerscheibe des zweiten Trägers eine die zweite Trägerscheibe vollständig durchdringende Durchtrittsöffnung auf. Durch diese Durchtrittsöffnung kann der Haltedorn des ersten Trägers geschoben werden. Somit benötigt der zweite Träger keinen eigenen Haltedorn zur Befestigung in der Maschine, sondern kann den Haltedorn des ersten Trägers nutzen. Der erste Träger weist dadurch auch eine Haltefunktion der Kappsäge auf. Der zweite Träger wird einfach auf den ersten Träger aufgezogen und mit diesem drehfest verbunden. So kann der zweite Träger in Form einer Ringscheibe und damit kompakt ausgebildet werden. Ein weiterer Vorteil der Aufnahme der zweiten Trägerscheibe über seine Durchtrittsöffnung am Haltedorn ist eine Zentrierung der zweiten Trägerscheibe am ersten Träger. Somit kann die Wuchtgüte zusätzlich gesteigert werden.

In einer weiteren Ausgestaltung ist die erste Sägezahnscheibe mit dem ersten Träger stoffschlüssig verbunden, sodass eine drehfeste Verbindung auf einfache Weise realisiert ist.

In einer weiteren Ausgestaltung ist die zweite Sägezahnscheibe mit dem zweiten Träger stoffschlüssig verbunden. Dies bedeutet, dass die zweite Sägezahnscheibe ebenfalls auf einfache Weise drehfest mit dem zweiten Träger verbunden ist.

Sind die Sägezahnscheiben auszutauschen, so wird die üblicherweise mit Hilfe eines Klebers herbeigeführt stoffschlüssige Verbindung unter Hitze gelöst, die Fläche des Trägers gereinigt und eine neue Sägezahnscheibe stoffschlüssig mit dem Träger verbunden.

Zur Verwirklichung unterschiedlicher Abstände zwischen der ersten Sägezahnscheibe und der zweiten Sägezahnscheibe ist zwischen dem ersten Träger und dem zweiten Träger ein Distanzhalter angeordnet. In Abhängigkeit des zu trennenden Materials und/oder in Abhängigkeit einer bestimmten Größe der Werkstücke kann mit Hilfe des Distanzhalters auf einfache Weise der Abstand zwischen den Sägezahnscheiben variiert und angepasst werden. Der Distanzhalter, welcher in geeigneter Form lochscheibenartig ausgebildet ist, wird einfach zwischen die beiden Sägezahnscheiben, welche koaxial ausgebildet sind, positioniert, wodurch sich ein axialer Abstand zwischen den Scheiben in Abhängigkeit einer axialen Ausdehnung des Distanzhalters einstellt. Der Distanzhalter selbst ist ebenfalls bevorzugt koaxial mit den Sägescheiben ausgestaltet und kann bei einer ringförmigen Gestalt den Haltearm mittig aufnehmen. Dadurch ist zugleich eine Zentrierung sowohl der zweiten Sägezahnscheibe als auch des Distanzhalters auf dem ersten Träger erlangt.

In einer weiteren Ausgestaltung sind der erste Träger und der zweite Träger kraft- und/oder formschlüssig miteinander verbunden. Eine kraftschlüssige Verbindung ist bevorzugt lösbar auszubilden, wodurch die beiden Träger auch problemlos ausgetauscht werden können. Eine formschlüssige Verbindung kann eine relative Verdrehung zueinander vermeiden, wodurch die drehfeste Verbindung gesichert ist. Eine formschlüssige Verbindung kann bspw. durch eine teilweise komplementäre Ausbildung sich gegenüberliegender Flächen des ersten Trägers und des zweiten Trägers herbeigeführt werden.

In einer weiteren Ausgestaltung der erfindungsgemäßen Kappsäge ist ein die zweite Trägerscheibe des zweiten Trägers vollständig umfassender Bund bezüglich einer Symmetrieebene der zweiten Trägerscheibe in seiner in Richtung der Drehachse ausgebildeten Erstreckung asymmetrisch an der zweiten Trägerscheibe positioniert. Dabei ist insbesondere ein sich ausgehend von der Symmetrieebene erstreckender erster Bundabschnitt, welcher auf einer dem Haltedorn zugewandten Trägerfläche der zweiten Trägerscheibe ausgebildet ist, größer ausgeführt als ein von dieser Trägerfläche abgewandt ausgebildeter zweiter Bundabschnitt. Diese Asymmetrie reduziert bzw. verhindert eine Durchbiegung der zweiten Trägerscheibe, welche aufgrund bei hohen Drehzahlen auftretender Fliehkräfte in Erscheinung tritt. Mit anderen Worten wird dadurch eine Stabilität der Kappsäge erzielt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Gleichen oder funktionsgleichen Elementen sind identische Bezugszeichen zugeordnet. Aus Gründen der Übersichtlichkeit ist es möglich, dass die Elemente nicht in allen Figuren mit ihrem Bezugszeichen versehen sind, ohne jedoch ihre Zuordnung zu verlieren. Es zeigen:
Fig. 1 in einem Längsschnitt eine erfindungsgemäße Kappsäge für eine Schneidmaschine ,

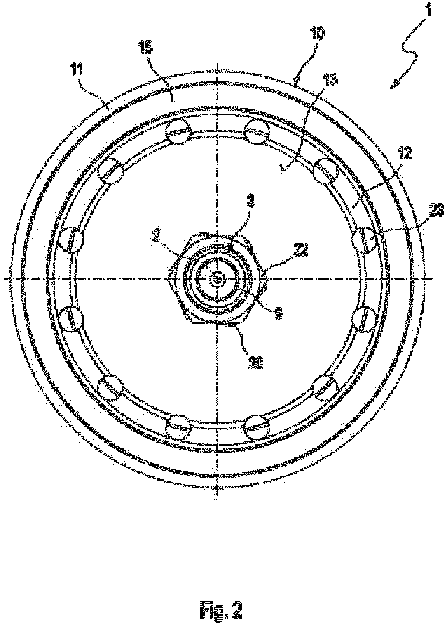

Fig. 2 in einer Draufsicht die Kappsäge gem. Fig. 1,

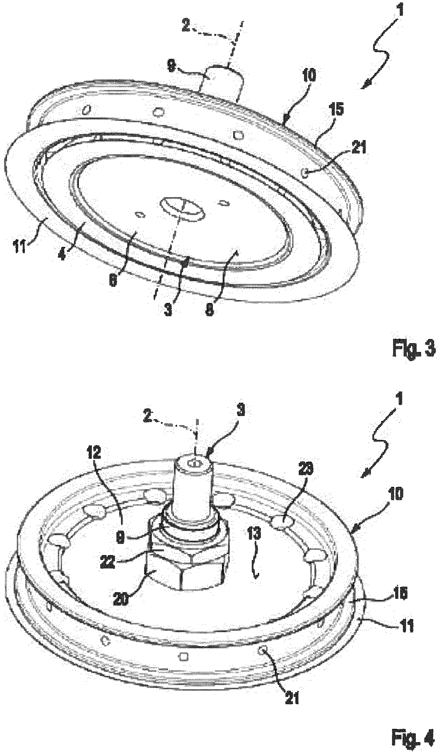

Fig. 3 in einer perspektivischen Darstellung von unten die Kappsäge gem. Fig. 1,
Fig. 4 in einer perspektivischen Darstellung von Oben die Kappsäge gem. Fig. 1,
Fig. 5 in einem Längsschnitt eine Variante der erfindungsgemäßen Kappsäge für eine Schneidmaschine, und
Fig. 6 in einer Draufsicht die Kappsäge gem. Fig. 5.

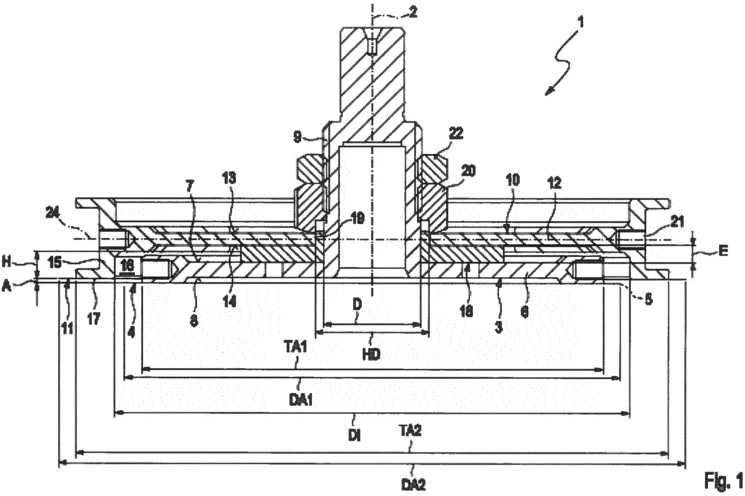

Ein erfindungsgemäße Kappsäge 1 für eine nicht näher dargestellte Schneidmaschine ist gemäß einer in Fig. 1 dargestellten Struktur aufgebaut. Die Kappsäge 1 ist bezüglich ihrer Drehachse 2 symmetrisch ausgebildet. Die Drehachse 2 entspricht in einem Betrieb der Kappsäge 1 mit der Schneidmaschine einer Rotationsachse der Kappsäge 1.

Die Kappsäge 1 weist einen ersten Träger 3 und eine am ersten Träger 3 drehfest aufgenommene erste Sägezahnscheibe 4 auf. Die erste Sägezahnscheibe 4 ist kreisförmig ausgebildet und weist zur Herstellung eines Freischnittes eine Mehrzahl von Sägezähnen 5 auf. Die Mehrzahl von Sägezähnen 5 kann über ihrem Umfang und/oder Planflächen der ersten Sägezahnscheibe 4 ausgebildet sein.

Der erste Träger 3 umfasst eine erste Trägerscheibe 6 mit einer ersten Trägerfläche 7 und einer zweiten Trägerfläche 8. Sie weist an ihrer ersten Trägerfläche 7 einen einstückig mit der ersten Trägerscheibe 6 ausgebildeten Haltedorn 9 auf. Der Haltedorn 9 ist konzentrisch mit der ersten Trägerscheibe 6 angeordnet. Der erste Träger 3 ist bezüglich der Drehachse 2 symmetrisch ausgebildet.

Die erste Sägezahnscheibe 4 ist an der zweiten Trägerfläche 8 aufgenommen, wobei die zweite Trägerfläche 8 von der ersten Trägerfläche 7 abgewandt ist. Mit anderen Worten ist die erste Sägezahnscheibe 4 von dem Haltedorn 9 abgewandt an dem ersten Träger 3 aufgenommen.

Die erste Sägezahnscheibe 4 ist mit dem ersten Träger 3 stoffschlüssig verbunden. Die stoffschlüssige Verbindung kann mit einem geeigneten Klebstoff herbeigeführt werden, wobei bei geeigneten Materialien des ersten Trägers 3 und der ersten Sägezahnscheibe 4 auch eine Verschweißung oder Verlötung der beiden Bauteile 3, 4 erfolgen kann.

Die Kappsäge 1 umfasst einen zweiten Träger 10. Der zweite Träger 10 ist zur Aufnahme einer zweiten Sägezahnscheibe 11 ausgebildet. Mit Hilfe des zweiten Trägers 10 ist die zweite Sägezahnscheibe 11 parallel zur ersten Sägezahnscheibe 4 anzuordnen. Die zweite Sägezahnscheibe 11 ist kreisförmig ausgebildet und weist zur Herstellung eines Freischnittes ebenfalls, wie die erste Sägezahnscheibe 4, eine Mehrzahl von Sägezähnen 5 auf. Die Mehrzahl von Sägezähnen 5 kann über ihrem Umfang und/oder Planflächen der zweiten Sägezahnscheibe 11 ausgebildet sein.

Zur kompakten Anordnung der ersten Sägezahnscheibe 4 und der zweiten Sägezahnscheibe 11 weist der zweite Träger 10 eine zweite Trägerscheibe 12 auf, an deren Umfang ein sich über eine dritte Trägerfläche 13 der zweiten Trägerscheibe 12 und vierten Trägerfläche 14 erstreckender Bund 15 ausgebildet ist. Mit anderen Worten ist der Bund 15 die zweite Trägerscheibe 12 über deren Umfang umfassend ausgebildet. Mit Hilfe dieses Bundes 15 ist ein erster Hohlraum 16 des zweiten Trägers 10 an der vierten Trägerfläche 14 ausgestaltet, in welchem die erste Trägerscheibe 6 des ersten Trägers 3 anzuordnen ist.

Des Weiteren ist mit Hilfe dieses Bundes 15, an dessen sich über die vierte Trägerfläche 14 erstreckenden ersten Endes 17 die zweite Sägezahnscheibe 11 mit dem zweiten Träger 10 drehfest und stoffschlüssig verbunden ist, ist ein axialer Abstand A zwischen der ersten Sägezahnscheibe 4 und der zweiten Sägezahnscheibe 11 einzustellen. D.h., dass in Abhängigkeit einer Bundhöhe H des Bundes 15, welche zwischen der vierten Trägerfläche 14 und der zweiten Sägezahnscheibe 11 ausgebildet ist, ist der Abstand A zwischen der ersten Sägezahnscheibe 4 und der zweiten Sägezahnscheibe 11 ausgebildet.

Der Bund 15 ist bezüglich einer Symmetrieebene 24 der zweiten Trägerscheibe 12 in seiner in Richtung der Drehachse 2 ausgebildeten Erstreckung asymmetrisch an der Trägerscheibe 12 positioniert. Ebenso könnte er auch symmetrisch zur Symmetrieebene 24 an der Trägerscheibe 12 ausgebildet sein.

Zwischen dem ersten Träger 3 und dem zweiten Träger 10 ist ein scheibenformartiger Distanzhalter 18 angeordnet, mit dessen Hilfe der Abstand A zusätzlich variiert werden kann. Entsprechend seiner axialen Erstreckung E ist ein axialer Trägerabstand zwischen der ersten Trägerscheibe 6 und der zweiten Trägerscheibe 12 veränderbar, wodurch der axiale Abstand A zwischen der ersten Sägezahnscheibe 4 und der zweiten Sägezahnscheibe 11 verändert wird.

Die erste Sägezahnscheibe 4 weist einen äußeren ersten Scheibendurchmesser DA1 auf, welcher größer ist als ein äußerer erster Trägerdurchmesser TA1 des ersten Trägers 3. Mit anderen Worten ist die erste Sägezahnscheibe 4 den ersten Träger 3 radial überragend ausgebildet. Die zweite Sägezahnscheibe 11 weist einen äußeren zweiten Scheibendurchmesser DA2 auf, welcher größer ist als ein äußerer zweiter Trägerdurchmesser TA2 des zweiten Trägers 10. D.h., die zweite Sägezahnscheibe 11 ist den zweiten Träger 10 radial überragend ausgebildet. Die radiale Erstreckung über den jeweiligen Träger 3, 10 der Sägezahnscheiben 4, 11 ist abhängig von einer zu erzielenden Schnitttiefe.

Zur einfachen Positionierung des ersten Trägers 3 im Hohlraum 16 ist der erste Scheibendurchmesser DA1 der ersten Sägezahnscheibe 4 kleiner als ein erster Innendurchmesser DI des zweiten Trägers 10, welcher mithilfe des Bundes 15 ausgebildet ist. Eine Differenz der beiden Durchmesser ist bevorzugt in Abhängigkeit einer Werkstückgröße zu ermitteln, damit während dem Kappen des Rohlings abgetrennte Werkstücke nicht in einen zwischen den beiden Sägezahnscheiben 4, 11 ausgebildeten Zwischenraum ansammeln und möglicherweise Verklemmen können.

Der zweite Träger 10 weist eine zentriert positionierte Aufnahmeöffnung 19 zur Aufnahme des Haltedorns 9 auf. Ein Öffnungsdurchmesser D der Aufnahmeöffnung 19 ist größer als ein Haltedornaußendurchmesser HD des Haltedorns 9, so dass der Haltedorn 9 vom zweiten Träger 10 umfasst positioniert ist. Mit anderen Worten ist der zweite Träger 10 den ersten Träger 3 in Richtung der Drehachse 2 überwiegend umfassend ausgestaltet. Der erste Träger 3 und der zweite Träger 10 sind koaxial ausgebildet.

Zur Herbeiführung einer drehfesten Verbindung zwischen dem ersten Träger 3 und dem zweiten Träger 10 sind der erste Träger 3 und der zweite Träger 10 kraft- und formschlüssig miteinander verbunden. Hierzu ist eine Überwurfmutter 20 an dem Haltedorn 9, diesen umfassend angeordnet. Mit Hilfe der Überwurfmutter 20, welche entlang der Drehachse 2 positionierbar ist, wird der zweite Träger 10 in Richtung der Drehachse 2 gegen den ersten Träger 3 verspannt.

Der Haltedorn 9 ist zur drehfesten Aufnahme der Kappsäge 1 in einem nicht näher dargestellten Maschinenfutter der Schneidmaschine ausgebildet ist. Eine weitere Überwurfmutter 22 dient einer Sicherung der Überwurfmutter 20.

Über dem Umfang des zweiten Trägers 10 sind Wuchtbohrungen 21 ausgebildet. Diese Wuchtbohrungen 21 dienen einer Herbeiführung einer unwuchtfreien Rotation der Kappsäge 1. Hierzu können bspw. in die Wuchtbohrungen 21 nicht näher dargestellte Wuchtmarken eingeführt werden.

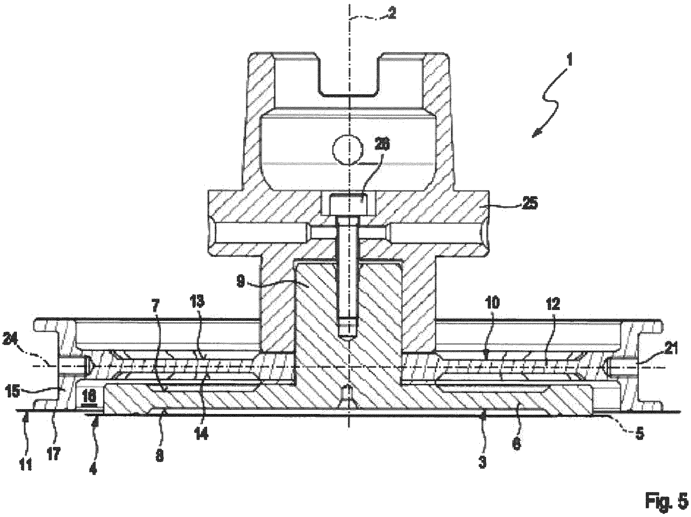

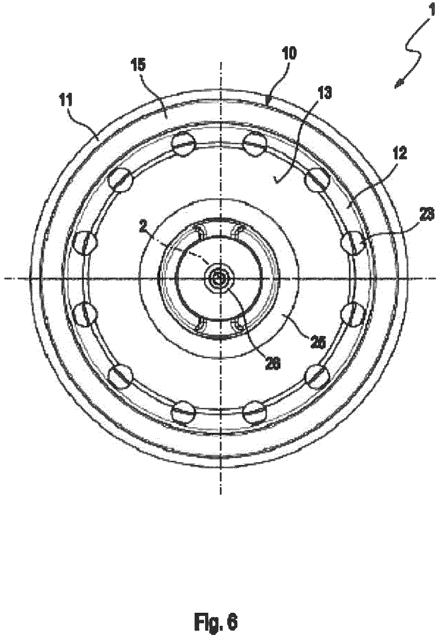

In den Figuren 5 und 6 ist in einem weiteren Ausführungsbeispiel eine Variante der erfindungsgemäßen Kappsäge 1 dargestellt. Der Haltedorn 9 ist in einem kegelförmigen Halteelement 25 verdrehfest aufgenommen. Zur drehfesten Verbindung des Halteelements 25 mit dem Haltedorn 9 und somit zur drehfesten Verbindung des Halteelements 25 mit dem ersten Träger 3 ist ein Sicherungselement 26 das Halteelement 25 mit dem Haltedorn 9 form- und kraftschlüssig verbindend ausgebildet. Das Sicherungselement 26 ist im dargestellten Ausführungsbeispiel in Form einer Innensechskantschraube ausgeführt.

Der zweite Träger 10 weist die zweite Trägerscheibe 12 vollständig durchdringende Durchtrittsöffnungen 23 auf. Im Betrieb der Schneidmaschine mit der erfindungsgemäßen Kappsäge 1 kann ein Kühlschmiermittel unterstützt durch die Schwer- und Fliehkraft über diese Durchtrittsöffnungen 23 der ersten Sägezahnscheibe 4 zugeführt werden. Das Kühlschmiermittel dient einer Kühlung der ersten Sägezahnscheibe 4 und der zweiten Sägezahnscheibe 11. Des Weiteren dient das Kühlschmiermittel einem Abtransport der mithilfe der Kappsäge 1 hergestellten Werkstücke, wie beispielsweise der Prismen oder Würfel.

In einem weiteren nicht näher dargestellten Ausführungsbeispiel weist die Kappsäge 1 einen dritten Träger auf, welcher den zweiten Träger 10 in Richtung der Drehachse 2 überwiegend umfassend ausgestaltet ist.

### BEZUGSZEICHENLISTE

- **1.**: Kappsäge
- **2.**: Drehachse
- **3.**: Erster Träger
- **4.**: Erste Sägezahnscheibe
- **5.**: Sägezahn
- **6.**: Erste Trägerscheibe
- **7.**: Erste Trägerfläche
- **8.**: Zweite Trägerfläche
- **9.**: Haltedorn
- **10.**: Zweiter Träger
- **11.**: Zweite Sägezahnscheibe
- **12.**: Zweite Trägerscheibe
- **13.**: Dritte Trägerfläche
- **14.**: Vierte Trägerfläche
- **15.**: Bund
- **16.**: Erster Hohlraum
- **17.**: Erstes Ende
- **18.**: Distanzhalter
- **19.**: Aufnahmeöffnung
- **20.**: Überwurfmutter
- **21.**: Wuchtbohrung
- **22.**: Weitere Überwurfmutter
- **23.**: Durchtrittsöffnung
- **24.**: Symmetrieebene
- **25.**: Halteelement
- **26.**: Sicherungselement

- A: axialer Abstand
- DA1: erster Scheibendurchmesser
- DA2: zweiter Scheibendurchmesser
- DI: Innendurchmesser
- D: Öffnungsdurchmesser
- E: axiale Erstreckung
- H: Bundhöhe
- HD: Haltedornaußendurchmesser
- TA1: erster Trägerdurchmesser
- TA2: zweiter Trägerdurchmesser

## Patentansprüche

1. Kappsäge für eine Schneidmaschine, mit einer Drehachse (2) und aufweisend eine kreisförmige erste Sägezahnscheibe (4) und einen die erste Sägezahnscheibe (4) aufnehmenden ersten Träger (3), wobei die erste Sägezahnscheibe (4) über ihren Umfang und/ oder an ihren Planflächen eine Mehrzahl von Sägezähnen (5) aufweist, und wobei der erste Träger (3) entlang der Drehachse (2) symmetrisch ausgebildet ist, und wobei der erste Träger (3) an einer ersten Trägerfläche (7) einen Haltedorn (9) zur Aufnahme der Kappsäge (1) in einem Maschinenfutter der Schneidmaschine aufweist, und wobei die erste Sägezahnscheibe (4) an einer zweiten Trägerfläche (8) des ersten Trägers (3) positioniert ist, welche von der ersten Trägerfläche (7) abgewandt ausgebildet ist, **dadurch gekennzeichnet, dass** die Kappsäge (1) eine zweite Sägezahnscheibe (11) aufweist, welche parallel zur ersten Sägezahnscheibe (4) angeordnet ist.

2. Kappsäge nach Anspruch 1, **dadurch gekennzeichnet, dass** die erste Sägezahnscheibe (4) mit der zweiten Sägezahnscheibe (11) drehfest verbunden ist.

3. Kappsäge nach Anspruch 1 oder 2, **dadurch gekennzeichnet, dass** ein zweiter Träger (10) ausgebildet ist, welcher die zweite Sägezahnscheibe (11) aufnehmen ausgestaltet ist.

4. Kappsäge nach einem der vorhergehenden Ansprüche 1 bis 3, **dadurch gekennzeichnet, dass** ein äußerer erster Scheibendurchmesser (DA1) der ersten Sägezahnscheibe (4) kleiner ausgebildet ist als ein äußerer zweiter Scheibendurchmesser (DA2) der zweiten Sägezahnscheibe (11).

5. Kappsäge nach einem der vorhergehenden Ansprüche 1 bis 4, **dadurch gekennzeichnet, dass** der zweite Träger (10) und der erste Träger (3) koaxial ausgebildet sind, und wobei der zweite Träger (10) den ersten Träger (3) in Richtung der Drehachse (2) überwiegend umfassend ausgestaltet ist.

6. Kappsäge nach einem der vorhergehenden Ansprüche 1 bis 5, **dadurch gekennzeichnet, dass** eine zweite Trägerscheibe (12) des zweite Trägers (10) eine die zweite Trägerscheibe (12) vollständig durchdringende Durchtrittsöffnung (23) aufweist.

7. Kappsäge nach einem der vorhergehenden Ansprüche 1 bis 6, **dadurch gekennzeichnet, dass** die erste Sägezahnscheibe (4) mit dem ersten Träger (3) stoffschlüssig verbunden ist.

8. Kappsäge nach einem der vorhergehenden Ansprüche 1 bis 7, **dadurch gekennzeichnet, dass** die zweite Sägezahnscheibe (11) mit dem zweiten Träger (10) kraftschlüssig verbunden ist.

9. Kappsäge nach einem der vorhergehenden Ansprüche 1 bis 8, **dadurch gekennzeichnet, dass** zwischen dem ersten Träger (3) und dem zweiten Träger (10) ein Distanzhalter (18) angeordnet ist.

10. Kappsäge nach einem der vorhergehenden Ansprüche 1 bis 9, **dadurch gekennzeichnet, dass** der erste Träger (3) und der zweite Träger (10) kraft- und/oder formschlüssig miteinander verbunden sind.

11. Kappsäge nach einem der vorhergehenden Ansprüche 1 bis 10, **dadurch gekennzeichnet, dass** ein eine zweite Trägerscheibe (12) des zweiten Trägers (10) vollständig umfassender Bund (15) bezüglich einer Symmetrieebene (24) der zweiten Trägerscheibe (12) in seiner in Richtung der Drehachse (2) ausgebildeten Erstreckung asymmetrisch an der zweiten Trägerscheibe (12) positioniert ist.
